# EUROPEAN PATENT APPLICATION

(11) **EP 2 550 864 A2**
(43) Date of publication of application: **30.01.2013**
(21) Application number: 12177969.8
(22) Date of filing: 26.07.2012
(51) Int. Cl.: A21C 5/04

(54) **BREAD DOUGH DIVIDING MACHINE**

(30) Priority: 28.07.2011 ES 201131301
(71) Applicant: Colom Gari, Vicente, 12006 Castellon de la Plana (ES); Colom Gari, Fernando, 12006 Castellon de la Plana (ES)
(72) Inventor: Colom Gari, Vicente, 12006 Castellon de la Plana (ES); Colom Gari, Fernando, 12006 Castellon de la Plana (ES)
(74) Representative: Ungria López, Javier

(57) **Abstract**

Bread dough dividing machine comprising a rotating drum (1) provided with at least one diametrical hole (29) with a dough inlet and outlet mouthpiece (5), a piston (2) guided inside the diametrical hole (29), a fixed mouthpiece (4) for the entry of the dough, a conveyor belt (3) receiving the dough extracted by the piston (2), a weighing probe, a decoder and a control center.

It is characterized in that it comprises a first geared motor (6) connected to a first transmission mechanism that generates the rotary motion of the rotating drum (1), a second geared motor (7) connected to a second transmission mechanism that generates the forward and backward movement of the piston (2) inside the diametrical hole (29) of the rotating drum (1), wherein the movements of the geared motors (6, 7), with their transmission mechanisms, are two independent movements that can be adjusted separately; it also includes an automation system.

## Description

### Object of the invention

The present invention relates to a bread dough dividing machine, which works by means of the operation of two geared motors connected to their respective transmission mechanisms that independently carry out the movements of a rotating drum and a piston guided inside a diametrical hole of the rotating drum. The machine also has a conveyor belt moved by a motor.

Thus the movements, both the piston inside the diametrical hole and the rotating drum containing the piston, are performed by two geared motors that independently move the piston in its forward and backward movement inside the diametrical hole and the rotating drum in its rotary motion. In this way, the stroke of the piston inside the diametrical hole of the rotating drum and the rotation of the rotating drum can be modified, thus changing the degree of compression given to the dough since the movement of the rotating drum is independent from the movement of the piston.

### Technical problem to be solved and background of the invention

During the preparation of bread, the dough is subjected to various mechanical handlings that ruin the dough, breaking the fermentation cycle and reducing the quality of the finished product made.

Different machines directed to obtain portions of bread dough of identical weight are known in the state of the art, performing the weighing and equally dividing the bread dough during the preparation process. This will reduce the possibility that the dough can be damaged and will increase the quality of the final product made.

Document ES 2 003 651 A6 is known, which describes an automatic metering-weighing machine for bread dough, based on the conduction of the bread dough by means of a constant flow rate pump through an outlet opening. The dough is divided into equal portions by means of blades located outside the outlet opening. Such portions are automatically weighed, which allows varying the flow rate of the pump in order to correct errors in the desired weights. Document ES 2 003 667 A6 is known, which shows a number of improvements for dividing-weighing machines for equal portions of bread dough that consist in reducing the transmission mechanisms of the machines by using a set of rocker lever arms hinged to their lower end, mounting the stem shaft of a piston on the upper end inside a tilting drum located below the inlet hopper of the product.

Document ES 2 005 868 A6 is known, which describes an automatic weighing-dividing machine for portions of bread dough, based on the motion provided by a motor that, by means of a transmission system, provides motion to a piston located inside a drum. The machine comprises a hopper into which the undivided bread dough is added. The motion of the piston inside the drum produces a tilting movement of the drum with two key positions: the drum with the mouthpiece of the piston under the hopper and the drum with the mouthpiece of the piston close to a conveyor belt for already divided bread portions. Coinciding with the two key positions of the drum, the piston has the dough absorption position (with the mouthpiece of the piston under the hopper) and the dough ejecting position (with the mouthpiece next to the conveyor belt).

Document ES 2 153 713 B1 is known, which shows an improvement of the bread dough dividing machine, consisting in avoiding the unnecessary cut of dough so that it can be returned to the uncut dough afterwards, which is the standard procedure in the existing machinery. This improvement is achieved by modifying the stroke of the piston performing the suction, so that it sucks only the exact amount of dough needed for the preparation of each individual product.

Current machines work by a single motor that provides motion to a series of gears and belts, which provide the necessary movement to both the piston that sucks the dough portion and the drum that houses the piston. In such machines, it is not possible to vary the piston stroke inside the drum automatically. Therefore, the amount of bread dough to be extracted varies by changing the speed of the piston and its stroke. Such piston is always operated by a connecting rod and it is impossible to change the degree of compression of the dough since it depends on the geometric shape of the tile that connects the hopper and the piston drum.

### Description of the Invention

In order to achieve the objectives and avoid the drawbacks mentioned in the preceding paragraphs, the invention proposes a bread dough dividing machine comprising a rotating drum with at least one diametrical hole with a dough inlet and outlet mouthpiece housed inside said diametrical hole, a piston guided inside the diametrical hole, a fixed dough inlet mouthpiece facing the mouthpiece of the rotating drum in a first angular position thereof and a conveyor belt for receiving the dough ejected from the mouthpiece of the rotating drum through the piston.

The machine also comprises a first geared motor connected to a first transmission mechanism that generates the rotary motion of the rotating drum and a second geared motor connected to a second transmission mechanism that generates the forward and backward movement of the piston inside the diametrical hole existing in the rotating drum. It must be highlighted that the movements generated by both geared motors connected to their respective transmission mechanisms are independent.

As already mentioned, the machine comprises a first geared motor that, connected to a first transmission mechanism, allows the rotary motion of the rotating drum. Said first transmission mechanism comprises a crank, which is connected to the output shaft of the first geared motor. Such crank is connected at the opposite end to an elongated connecting rod that is, in turn, connected to an eccentric pin fixed to a disc integral with the rotating drum.

Likewise, the machine comprises a second gear motor connected to a second transmission mechanism that enables the forward and backward movement of the piston inside the diametrical hole of the rotating drum. The second transmission mechanism comprises a pinion connected to the output shaft of the first geared motor that connects a toothed wheel integral with a tubular shaft attached to a terminal plate. In such terminal plate an eccentric appendage is fixed, with which a connecting rod is coupled. The piston is coupled with its end opposed to the coupling to the terminal plate.

The disc of the first transmission mechanism is coaxially coupled around the tubular shaft of the second transmission mechanism.

Similarly, for its automation, the bread dough dividing machine has a weighing probe mounted at the beginning of the conveyor belt for the bread dough ejected by the piston, which sends weight data of the dough ejected by the piston to a control center that stores them and is capable of modifying the stroke of the piston inside the diametrical hole of the rotating drum by means of a decoder, as well as modifying the rotary motion of the rotating drum, making possible to vary the degree of compaction of the bread dough by means of the rotation modification.

### Description of the Figures

In order to complete the description and help to better understand the features of the invention, a set of drawings is attached to this specification as an integral part thereof, wherein by way of illustration and not limitation, the following has been represented:
Figure 1 shows a side view of the bread dough dividing machine, object of the invention.
Figure 2 shows a perspective view of the machine of the invention.
Figure 3 shows another perspective view of the bread dough dividing machine.
Figure 4 shows another side view of the interior of the machine of the invention.
Figures 5 and 6 show more perspective views of the machine object of the invention. Figure 5 provides a detailed view of the sectioned drum so that the diametrical hole and the piston can be seen.

The numerical references that are reflected in the figures correspond to the following elements:
- 1.-: rotating drum;
- 2.-: piston;
- 3.-: output conveyor belt;
- 4.-: fixed mouthpiece;
- 5.-: dough inlet and outlet mouthpiece;
- 6.-: first geared motor;
- 7.-: second geared motor;
- 8.-: motor;
- 12.-: supporting structure of the invention;
- 13, 13', 13".-: openings in the supporting structure (12) of the invention;
- 17.-: crank;
- 18.-: output shaft of the first geared motor (6);
- 19.-: elongated connecting rod;
- 20.-: eccentric pin;
- 21.-: disc;
- 22.-: pinion;
- 23.-: output shaft of the second geared motor (7);
- 24.-: toothed wheel;
- 25.-: tubular shaft;
- 26.-: terminal plate;
- 27.-: connecting rod;
- 28.-: eccentric appendix;
- 29.-: diametrical hole;
- 30.-: chain;
- 31.-: front pulley;
- 32.-: rear pulley.

### Detailed description of the invention

As already indicated, and as shown in the attached figures, the bread dough dividing machine comprises: a structure (12) that supports the other elements of the invention, a rotating drum (1) with a diametrical hole (29), a piston (2) for the entry and ejection of the dough housed in the diametrical hole (29), a fixed mouthpiece (4) for the entry of dough to the rotating drum (1), a first geared motor (6) to facilitate the rotation of the rotating drum (1) in combination with a first transmission mechanism, a second geared motor (7) connected to a second transmission mechanism to facilitate the movement of the piston (2) inside the diametrical hole (29) of the rotating drum (1), a motor (8) connected to a third transmission mechanism that transmits its motion to a conveyor belt (3), and a dough inlet and outlet mouthpiece (5) of the diametrical hole (29).

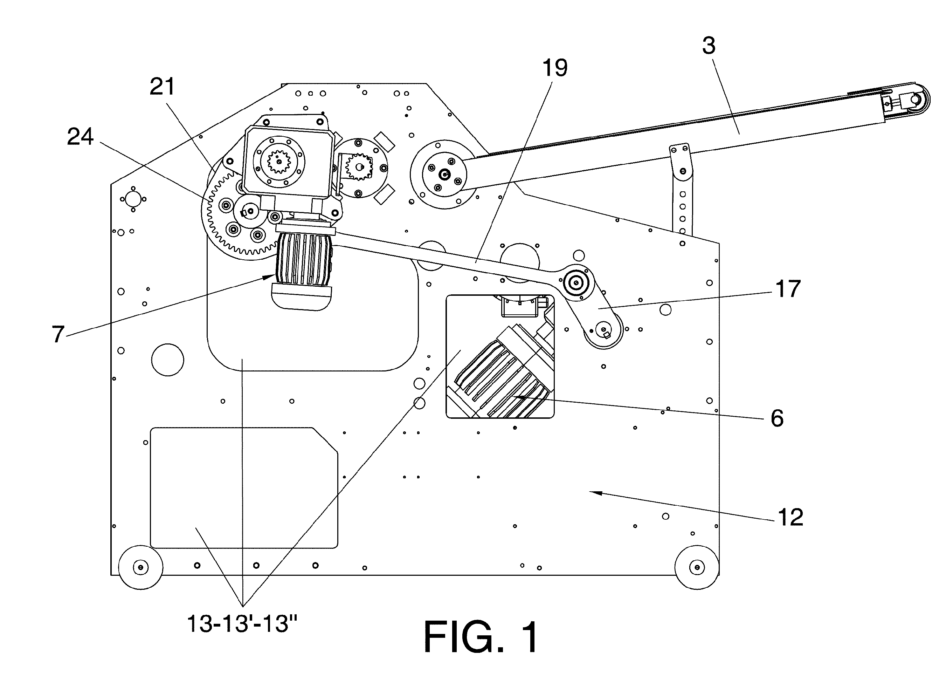

Figure 1 is a side view that shows the following: the second geared motor (7) that facilitates the movement of the piston (2) inside the diametrical hole of the rotating drum (1), a toothed wheel (24) that is part of the second transmission mechanism, and a first geared motor (6) for the rotation of the rotating drum (1). Some elements of the first transmission mechanism can also be observed. These elements are: a crank (17), an elongated rod (19) and a disc (21). It also shows the conveyor belt (3) receiving the dough ejected through the dough inlet and outlet mouthpiece (5). Finally, it shows a part of the supporting structure (12) of the invention provided with openings (13, 13', 13") to access the elements comprised by the invention.

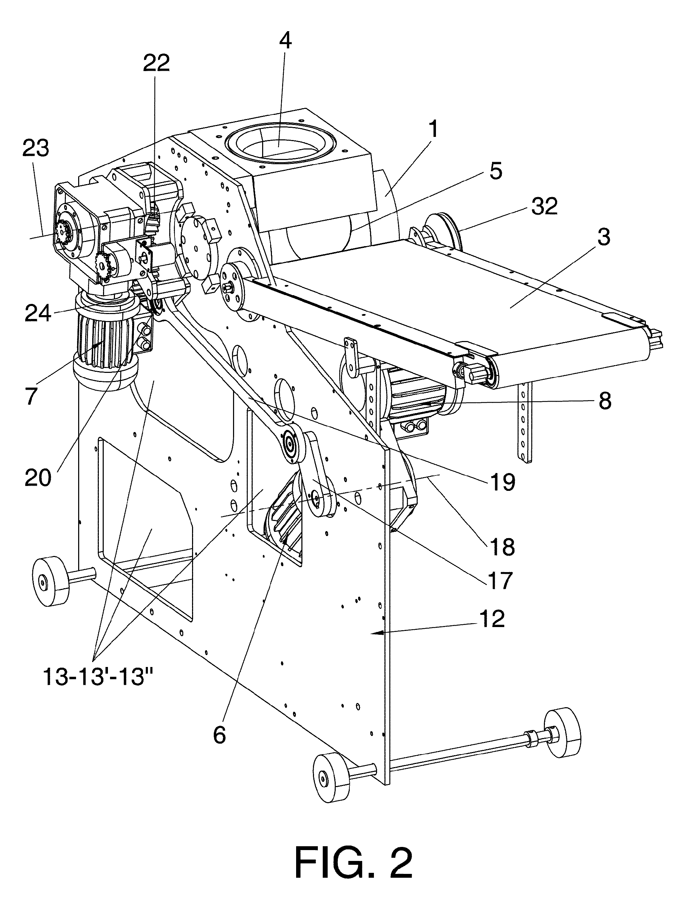

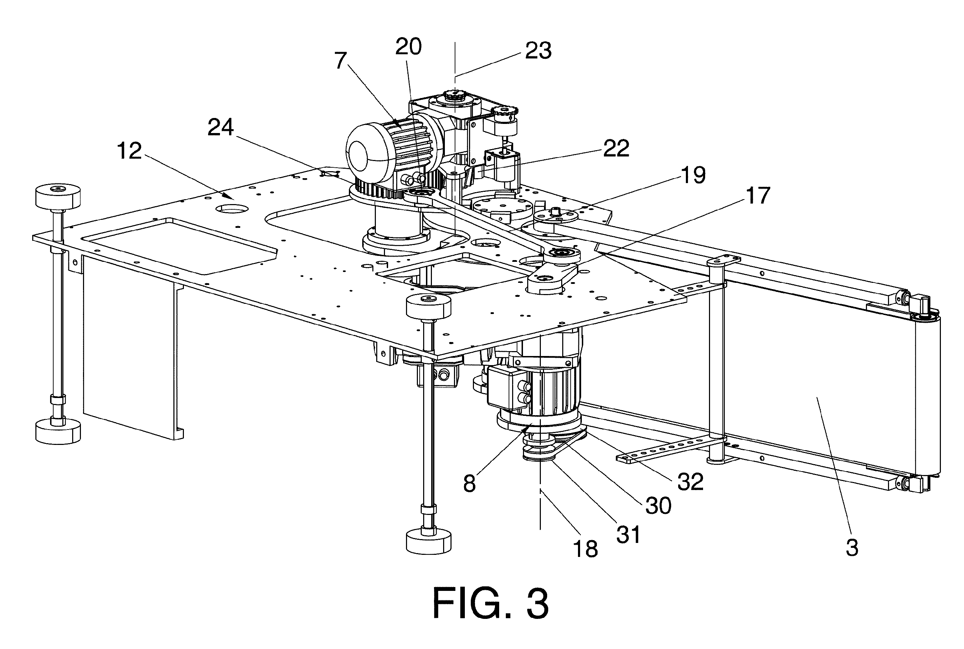

Figures 2 and 3 show elements shown in Figure 1, since these are two perspective views of the same thing. Furthermore, the perspective view of Figure 2 shows a part of the rotating drum (1), the fixed mouthpiece (4) for the entry of dough to the rotating drum (1) and the dough inlet and outlet mouthpiece (5) to the rotating drum, which cannot be seen in Figure 3. Both in Figure 2 and Figure 3, the motor (8) generating the movement of the conveyor belt (3) can be seen. Both figures show the elements of the first transmission mechanism more clearly. Thus, in these figures there are two elements that are not shown in Figure 1: the output shaft (18) of the first geared motor (6) and an eccentric pin (20). Likewise, they show elements of the second transmission mechanism that cannot be seen in Figure 1, including: an output shaft (23) of the second geared motor (7) and a pinion (22).

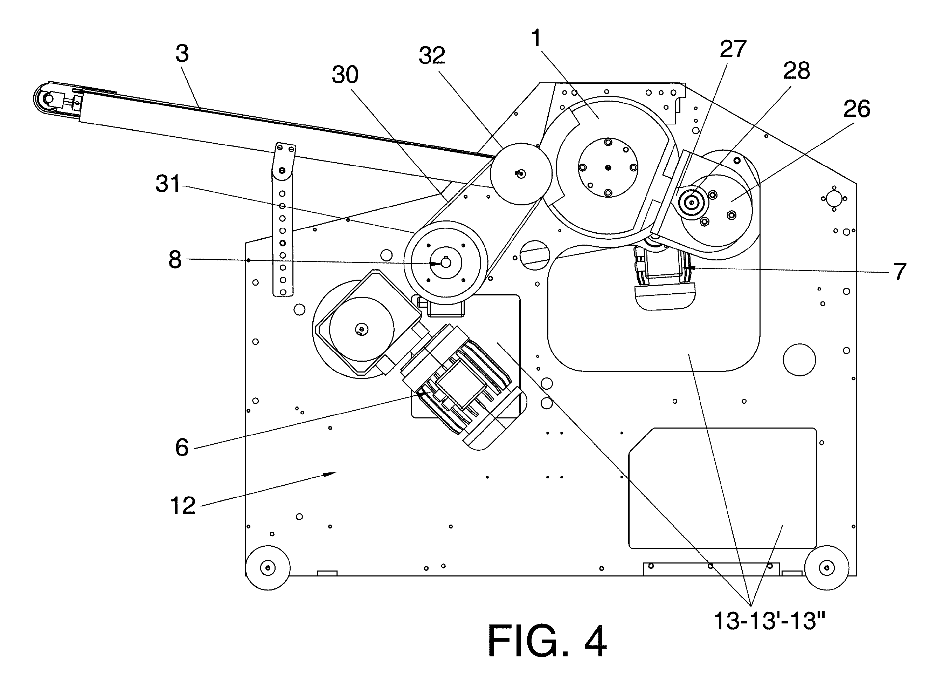

Figure 4 is a side view opposite to Figure 1 that shows the following elements: the rotating drum (1), the conveyor belt (3), the first geared motor (6) for rotating the rotating drum (1), the second geared motor (7) for moving the piston (2) and the motor (8) for moving the conveyor belt (3). It shows several elements of the second transmission mechanism including: a terminal plate (26), a connecting rod (27) coupled at one end to the piston (2) and at the other to an eccentric appendix (28). Finally, it shows a part of the supporting structure (12) of the invention provided with openings (13, 13', 13") for accessing the inner part of the supporting structure (12) and reaching the elements comprised by the invention.

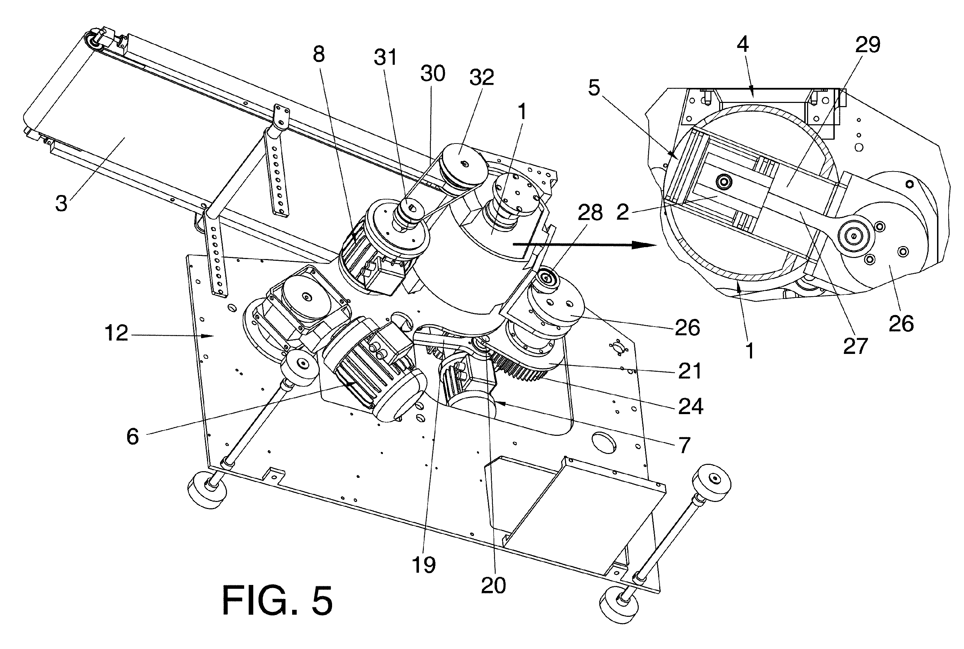

Figure 5 is a perspective view of the same side shown in Figure 4 made from the lower zone of the invention. The figure illustrates the two geared motors (6, 7) comprised by the invention and the motor (8), the conveyor belt (3), the rotating drum (1) and a part of the supporting structure (12) with the openings (13, 13', 13"). The following elements of the first transmission mechanism are observed: the elongated connecting rod (19) at the point where it connects with the eccentric pin (20) and the disc (21) to which the eccentric pin (20) is fixed. The second transmission mechanism shows the following elements: the toothed wheel (24), the terminal plate (26), the connecting rod (27) and the eccentric appendix (28) that acts as a link between the terminal plate (26) and the connecting rod (27). There is also a tubular shaft (25) around which the terminal plate (26) and the toothed wheel (24) are coaxially coupled.

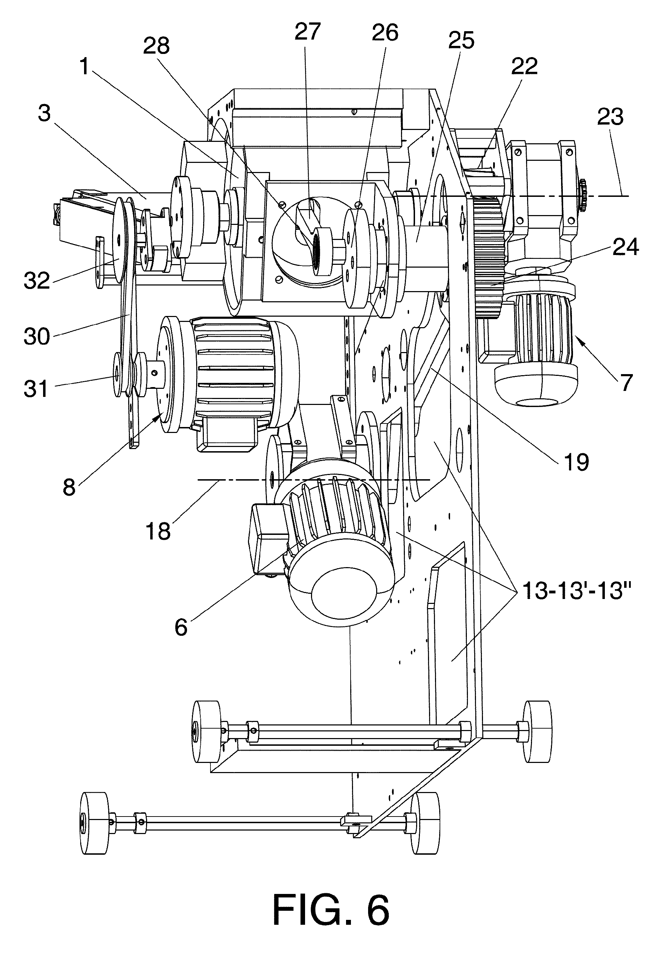

Figure 6 is another perspective view of the side shown in Figure 4. In this figure the two geared motors (6, 7) comprised by the invention can be seen, as well as the motor (8) and the rotating drum (1). Moreover, in this figure, the conveyor belt (3) and the elements of the third transmission mechanism that comprises a front pulley (31) can also be seen, as well as a rear pulley (32) and a chain (30) coupled in such pulleys. Two elements of the first transmission mechanism are shown: an elongated connecting rod (19) and the output shaft of the first geared motor (6). Of the second transmission mechanism the pinion (22), the output shaft (23) of the second geared motor (7), the toothed wheel (24), the tubular shaft (25), the terminal plate (26), the connecting rod (27) and the eccentric appendix (28) are shown. Finally, it is shown a part of the supporting structure (12) of the invention provided with openings (13, 13', 13") for accessing the inside of the supporting structure (12) and reaching the elements comprised by the invention.

The operation of the machine object of our invention follows the cycle described below:
- The dough from the kneader is introduced through the fixed mouthpiece (4). To do this, the rotating drum (1) must be in such a position that the diametrical hole (29) makes the mouthpiece (5) coincide with the fixed mouthpiece (4). Once the rotating drum (1) is placed in that position, the second geared motor (7), in combination with the second transmission mechanism, moves the piston (2) into a backward movement. During the backward movement of the piston (2) the suction of the dough portion required to produce the desired product takes place.
- Next, the first geared motor (6), in combination with the first transmission mechanism, causes the rotation of the rotating drum (1) until it reaches the position to eject the dough onto the conveyor belt (3). Once the rotating drum (1) is placed in this position, the second geared motor (7), in combination with the second transmission mechanism, moves the piston (2) forward into the diametrical hole (29) of the rotating drum (1), where the dough comes out to the conveyor belt (3) through the mouthpiece (5) of the rotating drum (1) thanks to the pushing performed by the piston (2) in the forward movement.
- It is to highlight the presence of a weighing probe at the beginning of the conveyor belt (3) for the bread dough ejected by means of the piston (2) that allows having a continuous monitoring of the weight value of the bread dough ejected by the piston (2). Such value is stored in a control center that, if necessary, sends a command to modify the stroke of the piston (2) by means of a decoder. The possibility of changing the motion of both the rotating drum (1) and the piston (2) thanks to the operation of the weighing probe, the control center and the decoder makes possible to work automatically for the bread dough dividing machine.

The operating cycle of the rotating drum (1) and the movement of the piston (2) inside the diametrical hole (29) is repeated as many times as necessary.

The first transmission mechanism that transmits the movement generated by the first geared motor (6) to the rotating drum (1) allowing the rotary motion of said rotating drum (1), operates as follows: the first geared motor (6) generates a movement in the output shaft (18), this movement causes the rotation of the crank (17) that is connected to the elongated connecting rod (19) through the end opposed to that for connecting to the output shaft (18) of the first geared motor (6). The elongated rod (19) is connected, as well as to the crank (17), to the eccentric pin (20) that is fixed to the disc (21) that is, in turn, integral with the rotating drum (1).

The second transmission mechanism that transmits the movement generated by the second geared motor (7) to the piston (2) allowing the forward and backward movement of the piston (2) inside the diametrical hole (29) comprised inside the rotating drum (1), works as follows: the second geared motor (7) generates a movement in the pinion (22) through the output shaft (23). The pinion (22) moves the toothed wheel (24), which is integral with the tubular shaft (25) attached to the terminal plate (26). The eccentric appendix (28) that allows the coupling between the connecting rod (27) and the terminal plate (26) is fixed to the terminal plate (26). Said connecting rod (27) is coupled at the other end of the piston (2) that is housed inside the diametrical hole (29) of the rotating drum (1).

The third transmission mechanism (1), which transmits the motion generated by the motor (8) to the conveyor belt (3) receiving the material, comprises the front pulley (31), the rear pulley (32) and the chain (30) that connects them.

## Claims

1. Bread dough dividing machine comprising:
- a rotating drum (1), provided with at least one diametrical hole (29) with a dough inlet and outlet mouthpiece (5) housed inside said diametrical hole,
- a piston (2) guided inside the diametrical hole (29),
- a fixed mouthpiece (4) for the entry of dough facing the mouthpiece (5) of the rotating drum (1) in a first angular position thereof,
- a conveyor belt (3) for receiving the dough ejected through the mouthpiece (5) of the rotating drum (1) by the piston (2) in a second angular position of the rotating drum (1),
**characterized in that** it comprises:
- a first geared motor (6) connected to a first transmission mechanism that generates the rotary motion of the rotating drum (1),
- a second geared motor (7) connected to a second transmission mechanism that generates the forward and backward movement of the piston (2) inside the diametrical hole (29) of the rotating drum (1), wherein the two movements generated by two geared motors (6, 7), in combination with their respective transmission mechanisms, are two independent movements with independent adjustments.

2. Bread dough dividing machine according to claim 1 **characterized in that** the first transmission mechanism comprises:
- a crank (17) connected to an output shaft (18) of the geared motor (6),
- an elongated connecting rod (19) connected at one end to the crank (17) and at the opposite end to an eccentric pin (20) fixed to a disc (21) integral with the rotating drum (1).

3. Bread dough dividing machine according to any of the preceding claims **characterized in that** the second transmission mechanism comprises:
- a pinion (22) connected to an output shaft (23) of the second geared motor (7),
- a toothed wheel (24) integral with a tubular shaft (25) attached to a terminal plate (26); this toothed wheel (24) engages with the pinion (22),
- a connecting rod (27) coupled at one end to the piston (2) and at the opposite end with an eccentric appendix (28) fixed to the terminal plate (26).

4. Bread dough dividing machine according to claims 2 and 3 **characterized in that** the disc (21) of the first transmission mechanism is coaxially coupled to the tubular shaft (25) of the second transmission mechanism.

5. Bread dough dividing machine according to claim 1 **characterized in that** the machine includes a probe for weighing the dough extracted by the piston (2) at the beginning of the conveyor belt (3).

6. Bread dough dividing machine according to claim 1, **characterized in that** the position of the piston (2) inside the rotating drum (1) is controlled by a decoder.

7. Bread dough dividing machine according to claims 1 to 6 **characterized in that** a control center stores the weight data provided by the weighing probe and acts on the second geared motor (7) for moving the piston (2) by changing the forward stroke of said piston (2) into the diametrical hole (29) by means of the decoder.
